# EUROPEAN PATENT SPECIFICATION

(11) **EP 2 546 098 B1**
(45) Date of publication and mention of the grant of the patent: **08.07.2015**
(21) Application number: 11425186.1
(22) Date of filing: 13.07.2011
(51) Int. Cl.: B60N 2/68, B60N 2/70

(54) **Method for manufacturing different backrests of motor vehicle rear seats and a set backrests produced according to this method**
Verfahren zur Herstellung verschiedener Rückenlehnen für Kraftfahrzeugrücksitze und gemäß des Verfahrens hergestellter Rückenlehnensatz
Procédé pour fabriquer différents dossiers pour sièges arrière de véhicule à moteur et ensemble de dossiers produit selon ce procédé

(43) Date of publication of application: 16.01.2013
(73) Proprietor: C.R.F. Società Consortile per Azioni, 10043 Orbassano (Torino) (IT)
(72) Inventor: Tosco, Franco, 10043 Orbassano (IT); Masoero, Giorgio, 10043 Orbassano (IT); Storgato, Angelo, 10043 Orbassano (IT); Tuvé, Salvatore, 10043 Orbassano (IT)
(74) Representative: Bergadano, Mirko

(56) References cited:
- WO-A1-01/40015
- US-A1- 2009 184 561
- US-B1- 6 217 062

## Description

The present invention relates to a method for manufacturing different backrests of motor vehicle rear seats.

As is known, for example see document US 2009/184561, the rear seats of motor vehicles have padding covered by a cover and supported by a structure comprising a substantially vertical backplate, to which the edges of the cover are secured. The structure also comprises a metal frame, which is defined by a tube having a ring shape, is arranged on the front surface of the plate and is fixed to the plate itself. Normally, the rear surface of the plate is covered by a panel made of a plastic material, so as to define the finishing trim facing the boot.

The frame tube can be formed by a plurality of tubular pieces welded together, or be defined by a single tubular piece bent so as to obtain the desired ring shape. Numerous metal components are welded to the frame, for example: two fastening elements, to install a baby's seat by means of Isofix-type anchorage devices; a side hinging device, to couple the backrest in a pivoting manner inside the motor vehicle; a catch member, to fasten the backrest in a releasable manner to a stop device or a lock in the motor vehicle; and at least two connection members to slidingly engage the rods of a headrest.

In short, in order to manufacture the backrest, the frame and the components to be welded are arranged on a template, equipped with retention and/or reference systems to obtain the relative positioning, specified on a per-project basis. Once the positioning is completed, the welding is performed. The frame is then turned upside down through 180° and placed on another template for finally attaching the plate. After being extracted from this last template, the structure is ready for being prepared to receive the foam padding. Finally, the cover that upholsters the padding is fitted.

In the known art, the shape and external dimensions of the frames of the rear seats are designed and made in a dedicated manner based on various parameters of the motor vehicle (for example, depending on the kind or segment of the motor vehicle, boot and passenger compartment dimensions, and the load to be supported in the case of an accident). In other words, for each motor vehicle, an associated frame is designed and made that, as a rule, does not have anything in common with the frames of the rear seats of other motor vehicles of a different kind or segment. In consequence, the templates for positioning the components to be welded must also be designed and manufactured in a dedicated manner.

Given that design work starts from scratch every time for each new motor vehicle, the design and production times and costs for the frames are relatively high, and the design of the templates is relatively long and complex.

The object of the present invention is that of providing a method for manufacturing different backrests of motor vehicle rear seats, that enables the above-stated problems to be reduced, in a simple and inexpensive manner.

According to the present invention, a method for manufacturing different backrests of motor vehicle rear seats is provided, as defined in claim 1.

The present invention also relates to a set of different backrests of motor vehicle rear seats, as defined in claim 6.

For a better understanding of the present invention, a preferred embodiment will now be described, purely by way of non-limitative example, with reference to the attached drawings, where:
- Figures 1 to 3 show, in perspective and with parts removed for clarity, different backrests of motor vehicle rear seats, made according to a preferred embodiment of the method of the present invention; and
- Figures 4 to 6 illustrate, schematically and on an enlarged scale, the cross-sections obtained along the section planes IV-IV, V-V and VI-VI in Figures 1-3 respectively.

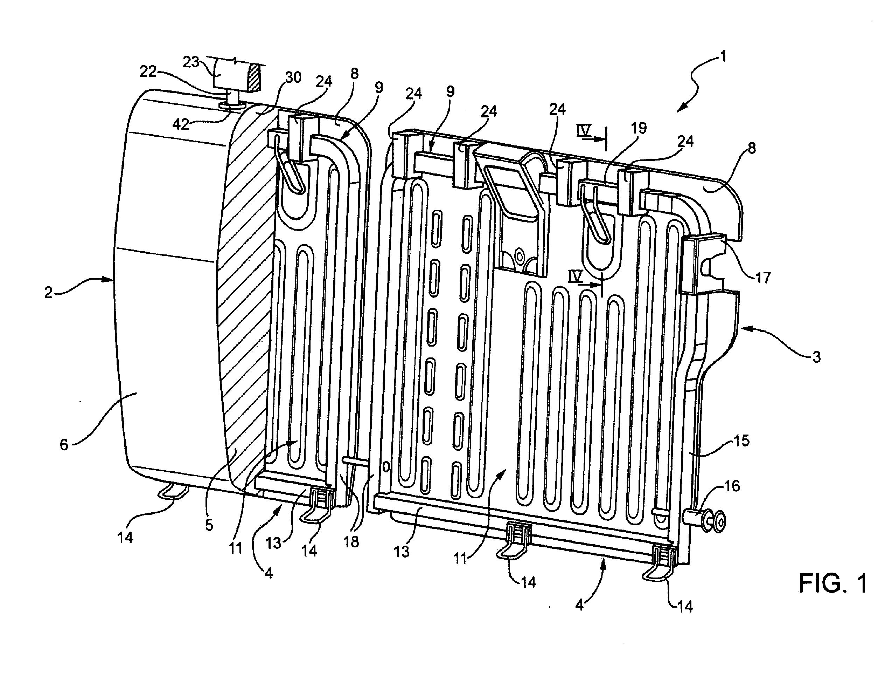

In Figure 1, reference numeral 1 indicates, as a whole, a seat backrest, mounted in a last row of seats in a motor vehicle.

In the embodiment shown, the backrest 1 is formed by two backrests 2 and 3 arranged side by side along a horizontal axis orthogonal to the direction of travel of the motor vehicle. Each backrest 2 and 3 comprises a rear structure 4, preferably made of a metal material; padding 5 (partially shown) made, for example, of foam material and supported by the structure 4; and a cover 6 (partially shown) made, for example, of fabric, which upholsters the front and sides of the padding 5.

The structure 4, in turn, comprises a rear plate 8 and a front frame 9. The rear surface of the plate 8 can, if necessary, be covered by a trim panel (not shown), which is preferably made of a plastic material, frontally delimits a luggage compartment (not shown) of the motor vehicle and is fastened to the structure 4 in a known manner, for example, by buttons that snap onto the plate 8.

The plate 8 is preferably made as a single piece in a metal or plastic material and is delimited by a front surface 11, against which the padding 5 rests. The cover 6 is secured to the plate 8 and, in particular, ends with a border fixed to the edge of the plate 8 in a known and not shown manner.

The frame 9 is placed in front of surface 11, is fastened to the plate 8 in a known manner, which is not described in detail, and is made of a metal material. The frame 9 is defined by a tube, i.e. an element having a closed cross-section, which is preferably formed by a plurality of pieces welded together so as to obtain a ring shape. Alternatively, the frame 9 is defined by a single tubular piece bent to obtain the ring shape.

The frame 9 lies substantially on a plane parallel to the plate 8 and comprises: a lower crossbar 13, which is substantially horizontal and supports fastening elements 14 to connect a baby's seat by means of Isofix-type anchorage devices (not shown); an outer side upright 15, which supports a hinge device 16 and a catch member 17 to secure the backrest 2,3 in a fixed position to a stop device or a lock (not shown) in the motor vehicle; an inner side upright 18, hinged to the upright 18 of the other backrest 3,2; and an upper crossbar 19, which is substantially horizontal, extends along an axis 20 and supports at least one pair of connection members 21, provided for attaching two rods 22 of a headrest 23 to the frame 9.

The fastening elements 14, the hinge device 16 and the catch member 17 comprise metal parts fixed to the frame 9 by welding.

Each connection member 21, on the other hand, comprises a guide 24 that is made of a plastic material and is fixed directly to the crossbar 19 by gluing. Each connection member 21 also comprises a cap 42, which is also made of a plastic material, is connected to an upper end portion of the guide 24 in a manner not described in detail and has a through opening defining an entrance for inserting the rod 22 into the guide 24.

To carry out the fixing to the frame 9, the latter and the other components are arranged on a first template (not shown) equipped with convenient retention and/or reference systems to keep the various parts in the relative positions as specified on a per-project basis. Once positioning is completed, the fixing operations are carried out. The frame 9, with the other components fixed to it, is then turned upside down through 180° and placed on a second template (not shown) in order to fix the plate 8 and thus form the structure 4. The structure 4 is then extracted from the second template to couple the padding 5. In particular, the padding 5 can be formed by injecting foam into a mould directly on the structure 4; in this way, the foam is integrally secured to the structure 4 during its curing. An alternative is represented by forming the foam of the padding 5 in a mould and fixing the padding 5 to the structure 4 at a later time (for example, at the production plant of the motor vehicle). Finally, the cover 6 is attached to upholster the padding 5.

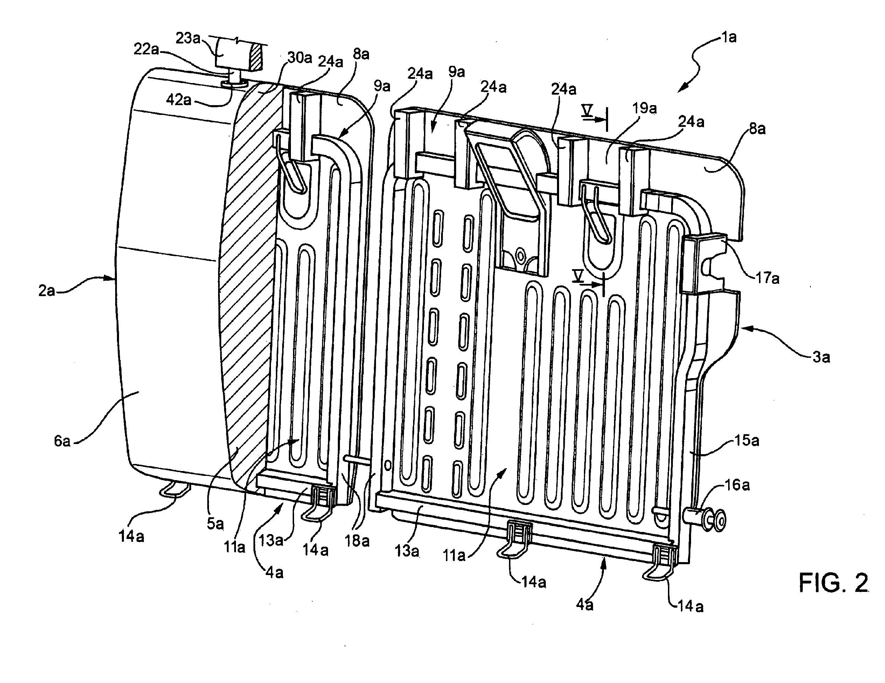

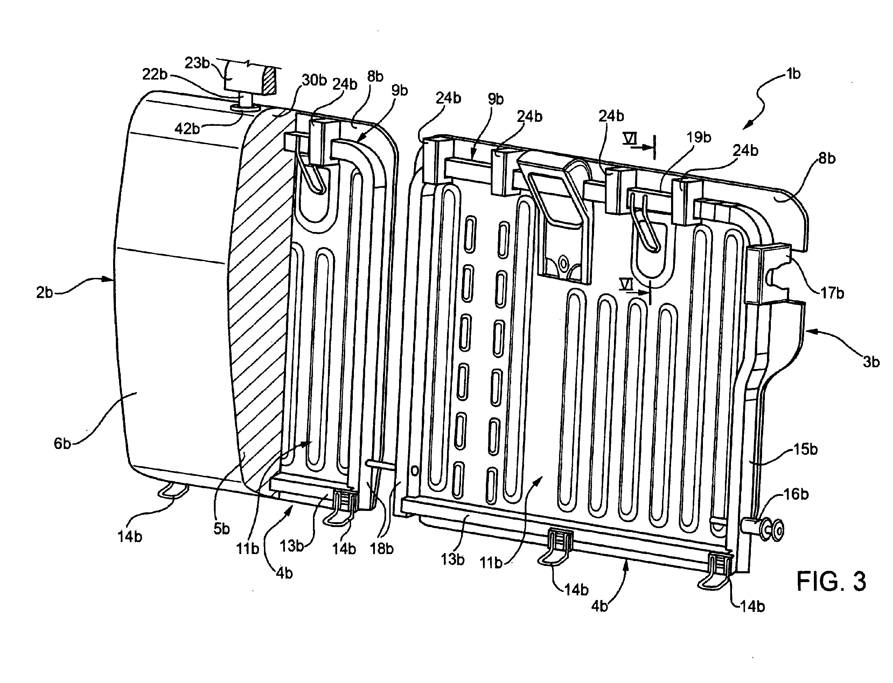

Figures 2 and 3 show other backrests, the constituent parts of which are indicated with the same reference numbers of Figure 1, followed by reference letters "a" and "b".

Backrests 2a, 3a, 2b and 3b are different from backrests 2 and 3, but frames 9, 9a and 9b are made with some geometrical and dimensional characteristics that are standardized. In particular, only two geometrical and dimensional characteristics of frames 9, 9a and 9b are left free to be designed and made differently each time for the various different backrests.

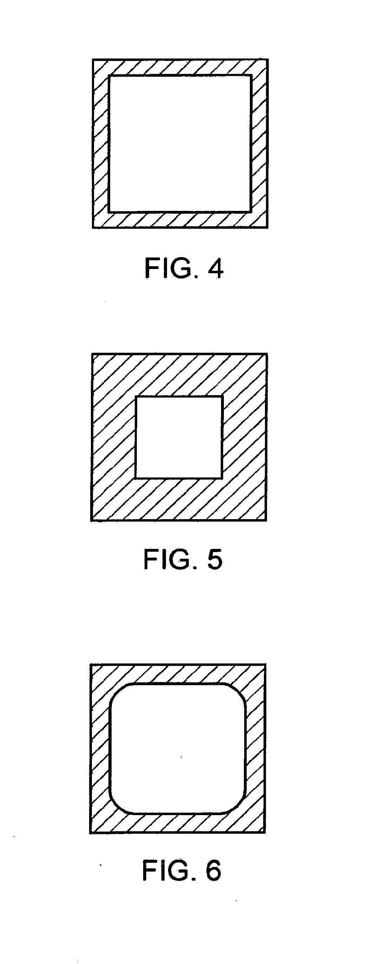

First of all, frames 9, 9a and 9b are made from tubes having cross-sections with the same shape and the same external dimensions, as can be seen in Figures 4 to 6.

Furthermore, frames 9, 9a and 9b have the same height as each other, i.e. the distance between crossbars 19 and 13, between crossbars 19a and 13a, and between crossbars 19b and 13b remains the same. Uprights 15, 15a and 15b are made with the same shape and external dimensions as each other, just as uprights 18, 18a and 18b are made with the same shape and external dimensions as each other. In other words, the annular paths defined by frames 9, 9a and 9b only differ from one another in one of their dimensions (the width of the frame). If the tube of each frame 9, 9a and 9b is formed by pieces of tube welded together, these pieces are cut to the required length. If the tubing of each frame 9, 9a and 9b is instead formed by a single bent tubular piece, the bending machines are programmed so as to obtain the required annular paths.

The characteristics that give uniformity to the final configuration (namely, the uniformity of the shape and external dimensions of uprights 15, 15a, 15b, 18, 18a and 18b, the uniformity of the shape and external dimensions of cross-sections of crossbars 19, 13, 19a, 13a, 19b and 13b, and the uniformity of the distance between crossbars 19 and 13, between crossbars 19a and 13a and between crossbars 19b and 13b) enable the making of frames 9, 9a and 9b to be standardized. Furthermore, they enable huge simplification in designing and making the templates on which frames 9, 9a and 9b must be positioned for fixing the other components. In fact, the size and configuration of the frame positioning systems remain the same for the various templates, as the external cross-section is the same. In addition, the relative positioning of the systems that must hold crossbars 19, 13, 19a, 13a, 19b and 13b on the various templates remains the same, as the distance between these crossbars is invariant.

To further increase the simplification of the template positioning systems, at least some of the components fixed to the frames 9, 9a and 9b can be standardized. In particular, the fastening elements 14, 14a and 14b are all the same and the two catch members 17 of the backrests 2,3 are the same despite being mounted in positions rotated by 180° (the same applies for catch members 17a and catch members 17b).

The imposed uniformity characteristics still leave adequate design freedom to make backrests that are different from each other and that meet the required specifications of the motor vehicles.

In particular, the thickness of the tubes can be different for different frames 9, 9a and 9b. In other words, the internal shape of the tubes is established on a per-project basis, depending on the mechanical characteristics (for example, resistance) called for when the backrests 1, 1a and 1b are used, essentially on the basis of the type of motor vehicle in which the seats must be mounted. In addition, the thickness of a tube to define a given frame can be variable along the tube axis, so as to optimize the total amount of material used.

With reference to Figures 1 and 3, backrests 1 and 1b have different widths. Frames 9 and 9b are made so as to obtain crossbars 19 and 13 of different lengths with respect to crossbars 19b and 13b. The lengths of crossbars 19, 13, 19b and 13b are established on a per-project basis, depending on the required width of the backrests 2, 3, 2b and 3b.

Instead, with reference to Figures 1 and 2, backrests 1 and 1a have different heights: in this case, the shape and external dimensions of frames 9 and 9a are not altered at all, but padding portions 30 and 30a are formed and/or joined having different heights above crossbars 19 and 19a. The difference in height between the padding portions 30 and 30a is around 2-6 centimetres. Plates 8 and 8a also have different heights, which correspond to those of the padding 5 and 5a. To have connection members 21 and 21a arranged substantially flush with the upper surface of cover 6 and 6a, and therefore compensate the differences in height of padding portions 30 and 30a, guides 24 and 24a are made so as to have different heights. Alternatively or in combination with variable-height guides 24 and 24a, caps 42 and 42a partially sink into padding portions 30 and 30a and are made so as to have different heights.

Alternatively, or in combination with padding portions 30 and 30a, padding portions having different heights are formed and/or joined below crossbar 13 and 13a.

From the foregoing, it is evident that, even if backrests 2, 3, 2a, 3a, 2b and 3b are different, the associated frames 9, 9a and 9b are made by standardizing the majority of their shape and dimension parameters that must be designed, for which the design and manufacture of the backrests proves to be much simpler. In any case, the possibility is left of designing from scratch a different seat that must meet new sizing/resistance specifications, or rather different specifications from those of the seats already produced according to the same method.

In particular, from the dimensional viewpoint, when making frames with the same side uprights, there is only one parameter to adjust in forming the frame, namely the length along a horizontal axis orthogonal to the direction of travel of the motor vehicle.

On the other hand, from the viewpoint of resistance of the structure 4, the inner geometry of the frame tubes can be adjusted, without altering the external geometry and therefore without the need to change the positioning systems of the above-mentioned templates between the various different backrests. The constraint on the external dimensions of the tube cross-section also enables the mounting parts of surrounding components to be standardized, whilst varying the thickness of the tube only by means of the internal space occupied.

## Claims

1. A method for manufacturing different backrests of motor vehicle rear seats; for each said backrest (2, 3, 2a, 3a, 2b, 3b), the method comprising the steps of:
- making a frame (9) defined by a tube extending along a ring-shaped path and comprising an upper horizontal crossbar (19), a lower horizontal crossbar (13) and two uprights (15,13) arranged at the sides;
- fixing a plurality of components to said frame (9);
- fixing said frame (9) onto a front surface of a plate (8) so as to form a support structure (4);
- coupling a padding (5) onto said support structure (4); and
- upholstering said padding (5) with a cover (6);
**characterized by** making different frames (9, 9a, 9b), belonging to different backrests (1, 1a and 1b), from tubes having cross-sections of the same shape and external dimensions; by making the different frames with the same height; and by making at least one of the two uprights with the same shape and external dimensions for the different frames; possible differences in height between said different backrests being obtained by coupling padding portions having different heights above said upper horizontal crossbar and/or below said lower horizontal crossbar.

2. The method according to claim 1, **characterized by** making the upper horizontal crossbars and lower horizontal crossbars with lengths that are different for the different frames and are established on a per-project basis, depending on the width of the respective different backrests.

3. The method according to claim 1 or 2, **characterized by** making the different frames starting from tubes having thicknesses that are different and that are established on a per-project basis, depending on the mechanical characteristics required by the respective different backrests.

4. The method according to claim 3, **characterized by** making the different frames starting from tubes having variable thicknesses along the respective said ring-shaped paths.

5. The method according to any of the preceding claims, **characterized by** making the other of the two uprights with same shape and external dimensions for the different frames.

6. A set of different backrests of motor vehicle rear seats, each said backrest (2,3) comprising a support structure (4) constituted by a plate and a frame (9) fixed onto a front surface of said plate (8); said frame (9) being defined by a tube extending along a ring-shaped path and comprising an upper horizontal crossbar, a lower horizontal crossbar and two uprights arranged at the sides; each said backrest also comprising a plurality of components fixed to said frame (9), a padding secured onto said support structure and a cover that upholsters said padding; **characterized in that**:
- the shape and external dimensions of the cross-section are the same for different frames belonging to different backrests;
- the shape and external dimensions of at least one of the two uprights are the same for different frames;
- different frames have the same height distance between the upper horizontal crossbar and the lower horizontal crossbar;
- possible height differences in height between said different backrests are due to different heights of said padding above said upper horizontal crossbar and/or below said lower horizontal crossbar.

7. A set according to claim 6, **characterized in that** the upper and lower horizontal crossbars, belonging to backrests having different widths, have different lengths from each other.

8. A set according to claim 7, **characterized in that** the other of the two uprights has the same shape and external dimensions for the different frames.

## Patentansprüche

1. Verfahren zur Herstellung unterschiedlicher Rückenlehnen von Rücksitzen von Motorfahrzeugen; wobei das Verfahren für jede Rückenlehne (2, 3, 2a, 3a, 2b, 3b) die folgenden Schritte umfasst:
- Herstellung eines Rahmens (9), der durch ein Rohr definiert ist, das sich entlang eines ringförmigen Weges erstreckt und eine obere horizontale Querstrange (19) umfasst, eine untere horizontale Querstange (13) und zwei aufrechte Stützen (15, 13), die an den Seiten angeordnet sind;
- Fixieren mehrerer Komponenten an dem Rahmen (9);
- Fixieren des Rahmen (9) auf einer vorderen Oberfläche einer Platte (8), um eine Trägerstruktur (4) zu bilden;
- Befestigen einer Polsterung (5) auf der Trägerstruktur (4); und
- Beziehen der Polsterung (5) mit einem Bezug (6);
**dadurch gekennzeichnet, dass** unterschiedliche Rahmen (9, 9a, 9b) hergestellt werden, die zu verschiedenen Rückenlehnen (1, 1a und 1b) gehören, von Rohren, die Querschnitte derselben Form und Außenabmessungen haben; durch das Herstellen der unterschiedlichen Rahmen mit derselben Höhe; und durch das Herstellen von wenigstens einem der beiden Stützen in derselben Form und mit denselben Außenabmessungen für unterschiedliche Rahmen; wobei mögliche Höhenunterschiede zwischen den unterschiedlichen Rückenlehnen durch das Befestigen von Polsterungsabschnitten mit unterschiedlichen Höhen über dem oberen horizontalen Querbalken und/oder unter dem unteren horizontalen Querbalken erhalten werden.

2. Verfahren nach Anspruch 1, **gekennzeichnet durch** das Herstellen der oberen horizontalen Querbalken und unteren horizontalen Querbalken mit Längen, die für die unterschiedlichen Rahmen unterschiedlich sind und für jedes Projekt festgelegt werden, je nach der Breite der jeweiligen unterschiedlichen Rückenlehnen.

3. Verfahren nach Anspruch 1 oder 2, **gekennzeichnet durch** das Herstellen der unterschiedlichen Rahmen ausgehend von Rohren, deren Dicken sich unterscheiden und die für jedes Projekt festgelegt werden, je nach den mechanischen Eigenschaften, die von den jeweiligen unterschiedlichen Rückenlehnen benötigt werden.

4. Verfahren nach Anspruch 3, **gekennzeichnet durch** das Herstellen der unterschiedlichen Rahmen ausgehend von Rohren mit variablen Dicken entlang der jeweiligen ringförmigen Wege.

5. Verfahren nach einem der vorangehenden Ansprüche, **gekennzeichnet durch** das Herstellen der anderen der beiden Stützen mit derselben Form und denselben Außenabmessungen für die unterschiedlichen Rahmen.

6. Set unterschiedlicher Rückenlehnen von Rücksitzen von Motorfahrzeugen, wobei jede Rückenlehne (2, 3) eine Trägerstruktur (4) umfasst, die aus einer Platte und einem Rahmen (9) besteht, die auf einer vorderen Oberfläche der Platte (8) fixiert sind; wobei der Rahmen (9) durch ein Rohr definiert ist, das sich entlang eines ringförmigen Weges erstreckt und einen oberen horizontalen Querbalken, einen unteren horizontalen Querbalken und zwei Stützen, die an den Seiten angeordnet sind, definiert ist; wobei jede Rückenlehne auch mehrere Komponenten umfasst, die an dem Rahmen (9) fixiert sind, eine Polsterung, die auf der Trägerstruktur fest befestigt ist, und einen Bezug, der die Polsterung bezieht; **dadurch gekennzeichnet, dass**
- die Form und Außenabmessungen des Querschnitts für unterschiedliche Rahmen, die zu unterschiedlichen Rückenlehnen gehören, gleich sind;
- die Form und Außenabmessungen von wenigstens einer der beiden Stützen für unterschiedliche Rahmen gleich sind;
- unterschiedliche Rahmen dieselbe Höhendistanz zwischen dem oberen horizontalen Querbalken und dem unteren horizontalen Querbalken aufweisen;
- mögliche Höhenunterschiede in der Höhe zwischen den unterschiedlichen Rückenlehnen aus unterschiedlichen Höhen der Polsterung oberhalb des oberen horizontalen Querbalkens und/oder unterhalb des unteren horizontalen Querbalkens resultieren.

7. Set nach Anspruch 6, **gekennzeichnet dadurch, dass** die oberen und unteren horizontalen Querbalken, die zu Rückenlehnen mit unterschiedlichen Breiten gehören, zueinander unterschiedliche Längen aufweisen.

8. Set nach Anspruch 7, **dadurch gekennzeichnet, dass** die andere der beiden Stützen dieselbe Form und dieselben Außenmaße für die unterschiedlichen Rahmen aufweist.

## Revendications

1. Procédé de fabrication de différents dossiers de sièges arrière de véhicule à moteur ; pour chaque dit dossier (2, 3, 2a, 3a, 2b, 3b), le procédé comprenant les étapes consistant à :
- créer un cadre (9) défini par un tube s'étendant le long d'une voie annulaire et comprenant une traverse horizontale supérieure (19), une traverse horizontale inférieure (13) et deux montants (15, 13) agencés sur les côtés ;
- fixer une pluralité de composants audit cadre (9) ;
- fixer ledit cadre (9) sur une surface avant d'une plaque (8) de manière à former une structure de support (4) ;
- accoupler un rembourrage (5) sur ladite structure de support (4) ; et
- recouvrir ledit rembourrage (5) d'un revêtement (6) ;
**caractérisé par** la création de différents cadres (9, 9a, 9b), appartenant à différents dossiers (1, la et 1b), à partir de tubes présentant des sections transversales de même forme et de mêmes dimensions extérieures ; par la création des différents cadres à la même hauteur ; et par la création d'au moins un des deux montants à la même forme et aux mêmes dimensions extérieures pour les différents cadres ; des différences de hauteur possibles entre lesdits dossiers étant obtenues par l'accouplement de parties de rembourrage ayant différentes hauteurs au-dessus de ladite traverse horizontale supérieure et/ou sous ladite traverse horizontale inférieure.

2. Procédé selon la revendication 1, **caractérisé par** la création des traverses horizontales supérieures et des traverses horizontales inférieures à des longueurs qui sont différentes pour les différents cadres et qui sont établies sur une base par projet, en fonction de la largeur des différents dossiers respectifs.

3. Procédé selon la revendication 1 ou 2, **caractérisé par** la création des différents cadres à partir de tubes ayant des épaisseurs qui sont différentes et qui sont établies sur une base par projet, en fonction des caractéristiques mécaniques nécessitées par les différents dossiers respectifs.

4. Procédé selon la revendication 3, **caractérisé par** la création des différents cadres à partir de tubes ayant des épaisseurs variables le long desdites voies annulaires respectives.

5. Procédé selon l'une quelconque des revendications précédentes, **caractérisé par** la création de l'autre des deux montants à la même forme et aux mêmes dimensions extérieures pour les différents cadres.

6. Ensemble de différents dossiers de sièges arrière de véhicule à moteur, chaque dit dossier (2, 3) comprenant une structure de support (4) constituée d'une plaque et d'un cadre (9) fixé sur une surface avant de ladite plaque (8) ; ledit cadre (9) étant défini par un tube s'étendant le long d'une voie annulaire et comprenant une traverse horizontale supérieure, une traverse horizontale inférieure et deux montants agencés sur les côtés ; chaque dit dossier comprenant également une pluralité de composants fixés audit cadre (9), un rembourrage fixé sur ladite structure de support et un revêtement qui recouvre ledit rembourrage ; **caractérisé en ce que** :
- la forme et les dimensions extérieures de la section transversale sont les mêmes pour différents cadres appartenant à différents dossiers ;
- la forme et les dimensions extérieures d'au moins un des deux montants sont les mêmes pour différents cadres ;
- différents cadres ont la même distance en hauteur entre la traverse horizontale supérieure et la traverse horizontale inférieure ;
- des différences de hauteur possibles entre lesdits différents dossiers sont dues aux différentes hauteurs dudit rembourrage au-dessus de ladite traverse horizontale supérieure et/ou sous ladite traverse horizontale inférieure.

7. Ensemble selon la revendication 6, **caractérisé en ce que** les traverses horizontales supérieure et inférieure, appartenant à des dossiers de différentes largeurs, ont des longueurs mutuellement différentes.

8. Ensemble selon la revendication 7, **caractérisé en ce que** l'autre des deux montants a la même forme et les mêmes dimensions extérieures pour les différents cadres.
